# EUROPEAN PATENT APPLICATION

(11) **EP 2 884 381 A1**
(43) Date of publication of application: **17.06.2015**
(21) Application number: 14156415.3
(22) Date of filing: 24.02.2014
(51) Int. Cl.: G06F 3/0488, G06F 3/039

(54) **Keypad for mobile terminal**

(30) Priority: 12.12.2013 KR 20130154669; 02.01.2014 KR 20140000248
(71) Applicant: Newvit Co., Ltd., Seoul 142-884 (KR)
(72) Inventor: Sin, Ki Sub, 143-839 Seoul (KR)
(74) Representative: Michalski Hüttermann & Partner Patentanwälte mbB

(57) **Abstract**

Disclosed herein is a keypad for a mobile terminal which is provided on a keyboard displayed on a touch screen, thereby enabling a touch having a three-dimensional effect, being capable of preventing the entry of a misspelling or missing word attributable to an error of a touch, and enabling input to the keyboard even without opening the cover of a casing. The keypad according to an embodiment of the present invention includes a mobile terminal equipped with a touch screen and a keypad member fixed to a position of the touch screen on which a keyboard is displayed and configured to include a plurality of button units having a key arrangement corresponding to the keyboard and to input a key of the keyboard, placed in a position corresponding to a selected button unit of the button units, to the mobile terminal when the selected one is pressed.

## Description

### CROSS-REFERENCE TO RELATED APPLICATIONS

This application is based on and claims priority from Korean Patent Application Nos. 10-2013-0154669 filed on December 12, 2013 and 10-2014-0000248 filed on January 2, 2014 in the Korean Intellectual Property Office, the disclosure of which is incorporated herein in its entirety by reference.

### BACKGROUND OF THE INVENTION

### Field of the Invention

The present invention relates to a keypad for a mobile terminal, and more particularly, to a keypad for a mobile terminal which is provided on a keyboard displayed on a touch screen, thereby enabling a touch having a three-dimensional effect, being capable of preventing the entry of a misspelling or missing word attributable to an error of a touch, and enabling input to the keyboard even without opening the cover of a casing.

### Background of the Related Art

With the recent development of various electronic information communication techniques, various types of electronic information terminals, such as smart phones, navigators, and tablet PCs, have been developed and spread. From among them, in particular, a smart phone can have desired programs or applications installed therein like a PC without being limited to a telephone function and can be used like a computer within a hand. Accordingly, users who use the smart phone is increased yearly and rapidly popularized.

A smart phone can be used as a portable PC in addition to a mobile phone in which a small-sized PC is combined with a digital mobile phone using a CDMA method and can perform the Internet, PC communication, and fax transmission wirelessly while in motion. An input device has been evolved into various types along with the development of electronic information terminals, such as smart phones, navigators, and tablet PCs, as described above.

An input device means an apparatus for reading data for communication with a device or apparatus from an input medium in addition to a voice (i.e., a natural voice or a machine sound). Examples of the input device include a keyboard, a mouse, a trackball (i.e., a device in which an upwardly exposed ball is rotated by a finger), a point stick, a touch pad (for a laptop), a Joystick, and an image scanner. A touch screen has recently been in the spotlight as an input device which can be easily used. Such a touch screen input device has been actively adopted in smart phones.

Such a touch screen input device adopts a resistive method of recognizing pressure on a screen, a capacitive method of flowing an electric current on a surface of a screen and recognizing the current using an electrostatic response of the human body, and an electromagnetic induction method of recognizing a position within a specific distance using a touch pen. From among the methods, the capacitive type touch screen is widely used.

In a touch screen input device using the capacitive method, however, a key adjacent to a desired key of the keyboard is erroneously touched because a keyboard is displayed on a touch screen in a small size. Accordingly, there is a problem in that input needs to be inevitably performed using one hand not using both hands for precise input.

Furthermore, keyboard input is made possible only when the cover of an existing casing for a mobile terminal is opened. Accordingly, there is a disadvantage in that text input is difficult in an urgent situation or if another hand that does not hold the mobile terminal is not free.

[Prior Art Document]

Korean Patent Application Publication No. 10-2007-0100209 (October 10, 2007)

### SUMMARY OF THE INVENTION

Accordingly, the present invention has been made in view of the above-mentioned problems occurring in the prior art, and it is an object of the present invention to provide a keypad for a mobile terminal which is provided on a keyboard displayed on a touch screen, thereby enabling a touch having a three-dimensional effect, being capable of preventing the entry of a misspelling or missing word attributable to an error of a touch, and enabling input to the keyboard even without opening the cover of a casing.

According to an aspect of the present invention, there is provided a keypad for a mobile terminal, including a mobile terminal equipped with a touch screen and a keypad member fixed to a position of the touch screen on which a keyboard is displayed and configured to include a plurality of button units having a key arrangement corresponding to the keyboard and to input a key of the keyboard, placed in a position corresponding to a selected button unit of the button units, to the mobile terminal when the selected one is pressed.

According to an aspect of the present invention, the keypad member is made of any one of flexible synthetic resin, fabric materials, and synthetic resin so that the button units are pressed, and a conductor is provided at the center of each of the button units so that an electric current within the human body is detected to the touch screen side through a finger that presses the button units.

According to another aspect of the present invention, there is provided a keypad for a mobile terminal, including a mobile terminal equipped with a touch screen, a casing member detachably combined with the back of the mobile terminal, a cover member connected to one side of the casing member in such a way as to be rotatably moved and configured to open or shut the touch screen depending on whether or not the cover member is rotatably moved and to include an opening part formed at a position corresponding to a keyboard displayed on the touch screen, and a keypad member placed within the opening part, connected to the cover member in such a way as to be rotatably moved, selectively located in the keyboard displayed on the touch screen when the keypad member is rotatably moved solely or along with the cover member, and configured to include a plurality of button units having a key arrangement corresponding to the keyboard and to input a key of the keyboard, placed in a position corresponding to a selected button unit of the button units, to the mobile terminal when the selected button unit is pressed.

According to an aspect of the present invention, the keypad member is made of any one of flexible synthetic resin, fabric materials, and synthetic resin so that the button units are pressed, and a conductor is provided at the center of each of the button units so that an electric current within the human body is detected to the touch screen side through a finger that presses the button un its.

According to yet another aspect of the present invention, there is provided a keypad for a mobile terminal, including a mobile terminal equipped with a touch screen, a casing member detachably combined with the back of the mobile terminal, and a keypad member connected to one side of the casing member in such a way as to be rotatably moved, selectively located in a keyboard displayed on the touch screen whether or not the keypad member is rotatably moved, and configured to include a plurality of button units having a key arrangement corresponding to the keyboard and to input a key of the keyboard, placed in a position corresponding to a selected button unit of the button units, to the mobile terminal when the selected button unit is pressed.

According to an aspect of the present invention, the keypad member is made of any one of flexible synthetic resin, fabric materials, and synthetic resin so that the button units are pressed, and a conductor is provided at the center of each of the button units so that an electric current within the human body is detected to the touch screen side through a finger that presses the button units.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a perspective view of a keypad for a mobile terminal according to an embodiment of the present invention;
FIG. 2 shows a state in which the keypad for a mobile terminal according to an embodiment of the present invention is used;
FIG. 3 shows another state in which the keypad for a mobile terminal according to an embodiment of the present invention is used;
FIG. 4 is a perspective view of a keypad for a mobile terminal according to an embodiment of the present invention;
FIG. 5 is a perspective view of a keypad for a mobile terminal according to another embodiment of the present invention.
FIGS. 6A and 6B show a state in which the keypad for a mobile terminal according to another embodiment of the present invention is used;
FIG. 7 is a perspective view of a keypad for a mobile terminal according to yet another embodiment of the present invention; and
FIG. 8 shows a state in which the keypad for a mobile terminal according to yet another embodiment of the present invention is used.

### DETAILED DESCRIPTION OF THE PREFERRED EMBODIMENT

Hereinafter, an explanation on a marine vessel winch equipped with hermetically sealed clutches according to the present invention will be in detail given with reference to the attached drawing. In the description, the thicknesses of the lines or the sizes of the components shown in the drawing may be magnified for the clarity and convenience of the description.

Further, the terms as will be discussed later are defined according to the functions of the present invention, but may be varied under the intention or regulation of a user or operator. Therefore, they should be defined on the basis of the whole scope of the present invention.

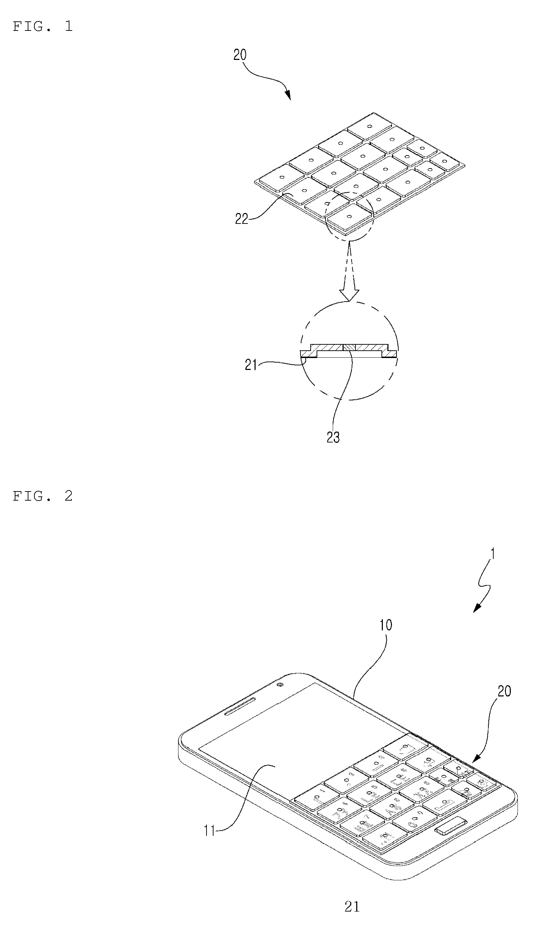

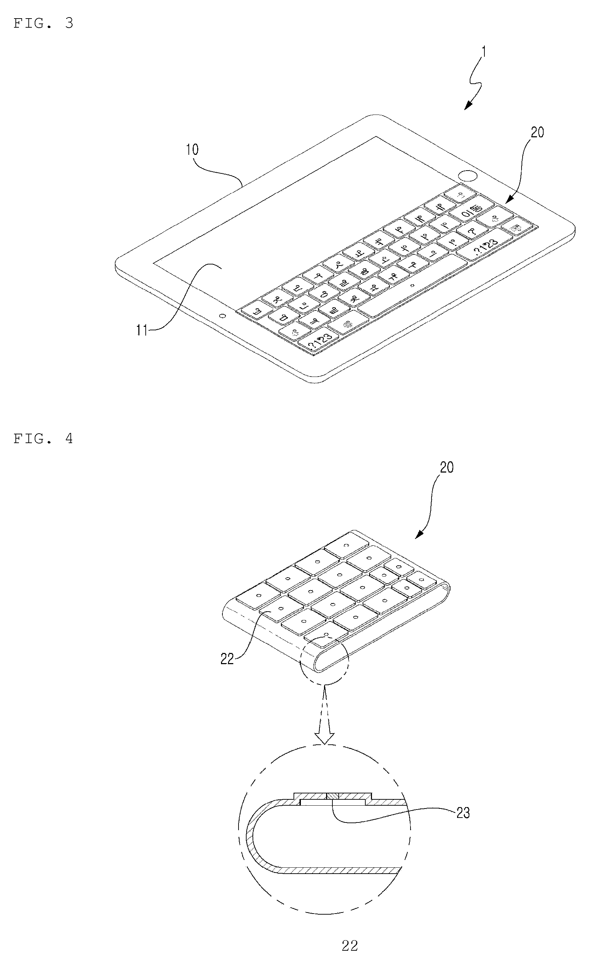

FIG. 1 is a perspective view of a keypad for a mobile terminal according to an embodiment of the present invention, FIG. 2 shows a state in which the keypad for a mobile terminal according to an embodiment of the present invention is used, FIG. 3 shows another state in which the keypad for a mobile terminal according to an embodiment of the present invention is used, and FIG. 4 is a perspective view of a keypad for a mobile terminal according to an embodiment of the present invention.

The keypad 1 for a mobile terminal according to an exemplary embodiment of the present invention includes a mobile terminal 10 equipped with a touch screen 11 and a keypad member 20 fixed in a position of the touch screen 11 where a keyboard is displayed and configured to include a plurality of button units 22 having a key arrangement corresponding to the keyboard and to have a key of the keyboard in a position, corresponding to a selected one of the button units 22, inputted to the mobile terminal 10 when the selected button unit is pressed.

The keypad 1 for a mobile terminal according to an exemplary embodiment of the present invention is described in detail below with reference to FIGS. 1 to 4.

The mobile terminal 10 is assumed to be one of a conventional smart phone and a conventional tablet PC and equipped with a capacitive type touch screen 11, and a further description is described in order to simplify the specification.

The keypad member 20 is detachably fixed to the position where the keyboard is displayed on the touch screen 11 of the mobile terminal 10. The keypad member 20 is provided on the touch screen 11 in which the keyboard is displayed. Thus, the keypad member 20 functions to prevent the entry of a misspelling or missing word when a user touches the keypad member 20 having a three-dimensional effect instead of touching the touch screen 11 in order to input the alphabet, numbers, and symbols.

Such a keypad member 20 includes the plurality of button units 22 having a key arrangement corresponding to the keyboard of the touch screen 11. When a selected one of the button units 22 is pressed, a key of the keyboard placed in a position corresponding to the selected button unit is inputted to the mobile terminal 10. Here, a method of performing input to the keyboard of the mobile terminal 10 is different in each manufacturer (e.g., the QWERTY keyboard and the Chonjiin keyboard), and a keyboard for numerical input or a keyboard for symbol input are different. Accordingly, the keypad member 20 suitable for a manufacturer may be selectively used. As shown, the button units 22 may be protruded, or the button units 22 are not protruded and a partition may be formed between the button units 22. A special engraving or embossing mark may be formed in each of the button units 22.

The keypad member 20 may be made of any one of flexible synthetic resin, fabric materials, and synthetic resin so that the button units 22 can be pressed. The keypad member 20 may be formed to transmit lighting from the touch screen 11 so that the button units 22 of the keypad member 20 can be identified in a dark place.

Furthermore, a conductor 23 is provided at the center of each of the button units 22 such that an electric current within the human body can be detected to the touch screen side through a finger that presses the button units 22. Accordingly, the keypad member 20 can be used in a capacitive type touch screen 11. Furthermore, the keypad member 20 can also be used in a resistive type touch screen 11 because a user's pressure can be transferred to the touch screen 11 through the button units 22 without change.

Furthermore, the keypad member 20 may be formed to have a size corresponding to the width of the touch screen 11 and seated on and fixed to the touch screen 11 as shown in FIGS. 2 and 3. In such a case, an adhesion pad 21 adhered and fixed on the touch screen 11 is provided at the edge of the back of the keypad member 20. Furthermore, as shown in FIG. 3, the keypad member 20 may be formed in a tubular form in such a way as to be elastically deformed and may be compressed and fixed to the mobile terminal 10 so that the button units 22 are placed on the touch screen 11. In this case, the keypad member 20 can be applied to the mobile terminal 10, such as a smart phone, as shown in FIG. 2 and can also be applied to the mobile terminal 10, such as a tablet PC, as shown in FIG. 3.

In the present invention, the keypad member 20 has been illustrated as being provided additionally or provided on the casing side, but the keypad member 20 may be provided in such a way as to enter or exit from the mobile terminal 10. Furthermore, braille points may be displayed on the button unit side for persons who are visually impaired.

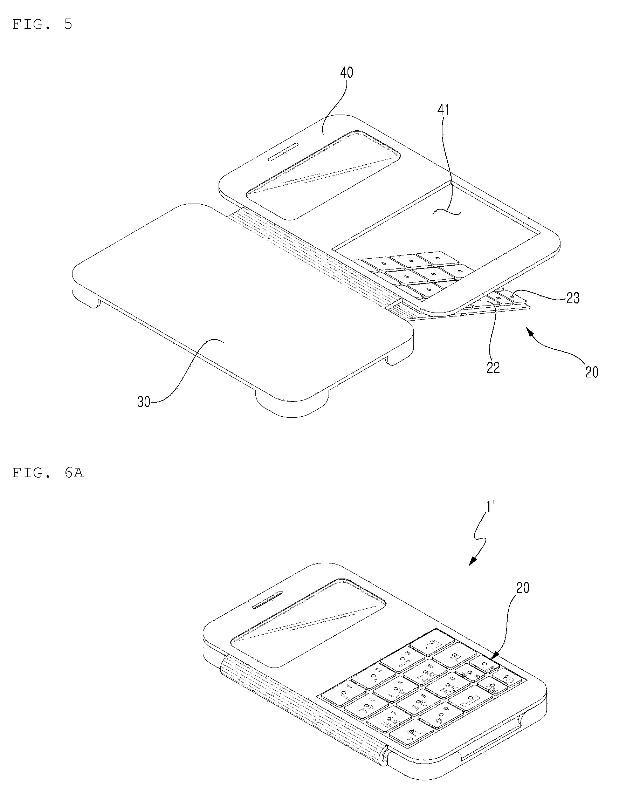

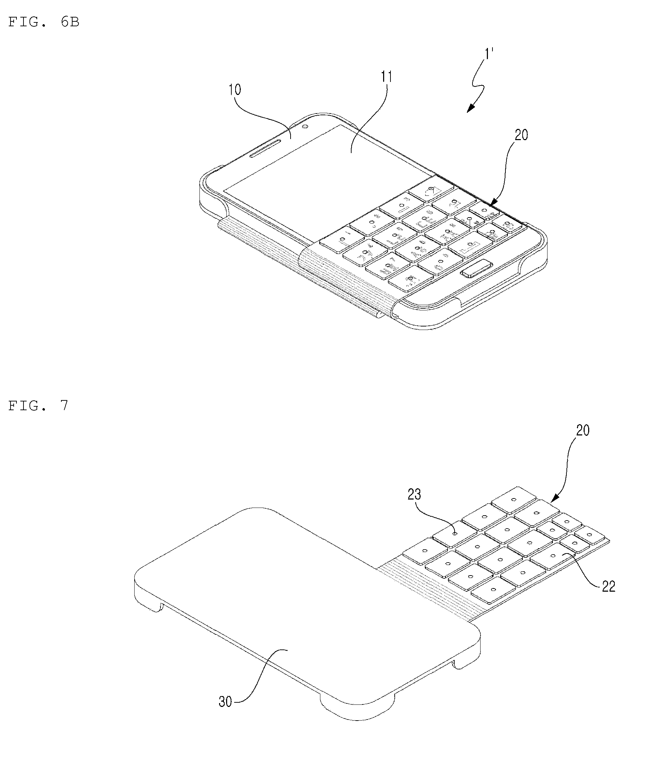

FIG. 5 is a perspective view of a keypad for a mobile terminal according to another embodiment of the present invention, and FIGS. 6A and 6B show a state in which the keypad for a mobile terminal according to another embodiment of the present invention is used. Here, the same elements as those of the keypad for a mobile terminal according to the aforementioned embodiment of the present invention are assigned the same reference numerals.

The keypad 1' for a mobile terminal according to another embodiment of the present invention includes a mobile terminal 10 equipped with a touch screen 11, a casing member 30 detachably combined with the back of the mobile terminal 10, a cover member 40 connected to one side of the casing member 30 in such a way to be rotatably moved and configured to open or shut the touch screen 11 depending on whether or not the cover member 40 is rotatably moved and to include an opening part 41 formed at a position corresponding to a keyboard displayed on the touch screen 11, and a keypad member 20 placed within the opening part 41, connected to the cover member 40 in such a way as to be rotatably moved, and selectively located in the keyboard displayed on the touch screen 11 when the keypad member 20 is rotatably moved solely or along with the cover member 40. Here, the keypad member 20 includes a plurality of button units 22 having a key arrangement corresponding to the keyboard. When a selected one of the button units 22 is pressed, the keypad member 20 inputs a key of the keyboard, placed in a position corresponding to the selected button unit, to the mobile terminal 10.

Furthermore, in the keypad 1' for a mobile terminal according to another embodiment of the present invention, the keypad member 20 may be made of any one of flexible synthetic resin, fabric materials, and synthetic resin so that the button units 22 can be pressed. A conductor 23 is provided at the center of each of the button units 22 such that an electric current within the human body can be detected to the touch screen side through a finger that presses the button units 22.

The keypad 1' for a mobile terminal according to another embodiment of the present invention is equipped with the casing member 30 provided at the back of the mobile terminal 10, the cover member 40 connected to one side of the casing member 30 and configured to have a position on which the keyboard is displayed opened on the touch screen 11, and the keypad member 20 provided on the opened side of the cover member 40. The general construction and operation of the keypad 1' for a mobile terminal according to another embodiment of the present invention are the same as or similar to those of the keypad 1 for a mobile terminal according to an embodiment of the present invention except that the keypad member 20, together with the cover member 40, may be rotatably moved and used as shown in FIG. 6A or may be rotatably moved and used separately from the cover member 40 as shown in FIG. 6B and thus can be sufficiently analogized from the above-described description. Accordingly, a redundant description between the keypad 1' and the keypad 1 is omitted for the simplicity of the specification. If the keypad member 20, together with the cover member 40, is rotatably moved and used as shown in FIG. 6A, there is an advantage in that alphabetic or numerical information can be entered to the mobile terminal 10 even without opening the cover member 40.

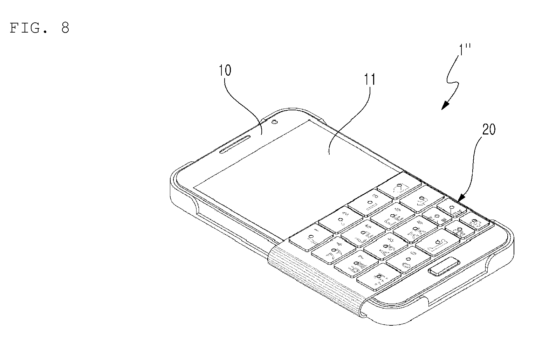

FIG. 7 is a perspective view of a keypad for a mobile terminal according to yet another embodiment of the present invention, and FIG. 8 shows a state in which the keypad for a mobile terminal according to yet another embodiment of the present invention is used. Here, the same elements as those of the keypad for a mobile terminal according to the aforementioned embodiments of the present invention are assigned the same reference numerals.

The keypad 1" for a mobile terminal according to yet another embodiment of the present invention includes a mobile terminal 10 equipped with a touch screen 11, a casing member 30 detachably combined with the back of the mobile terminal 10, and a keypad member 20 connected to one side of the casing member 30 in such a way as to be rotatably moved, selectively located in a keyboard that is displayed on the touch screen 11 depending on whether or not the keypad member 20 is rotatably moved, and configured to include a plurality of button units 22 having a key arrangement corresponding to the keyboard. When a selected one of the button units 22 is pressed, a key of the keyboard placed in a position corresponding to the selected button unit is inputted to the mobile terminal 10.

Furthermore, in the keypad 1" for a mobile terminal according to yet another embodiment of the present invention, the keypad member 20 may be made of any one of flexible synthetic resin, fabric materials, and synthetic resin so that the button units 22 can be pressed. A conductor 23 is provided at the center of each of the button units 22 such that an electric current within the human body can be detected to the touch screen side through a finger that presses the button units 22.

The keypad 1" for a mobile terminal according to yet another embodiment of the present invention is equipped with the casing member 30 provided at the back of the mobile terminal 10, the keypad member 20 connected to one side of the casing member 30 and selectively seated in a position on which the keyboard is displayed on the touch screen 11. Although not shown, when the keypad member 20 is not used, the keypad member 20 is rotatably moved toward the casing member 30 and fixed to the casing member 30 using Velcro, a snap button, or a magnetic body. The general construction and operation of the keypad 1" for a mobile terminal according to yet another embodiment of the present invention are the same as or similar to those of the keypad 1 for a mobile terminal according to an embodiment of the present invention except the above-described points and thus can be sufficiently analogized from the above-described description. Accordingly, a redundant description between the keypad 1" and the keypad 1 is omitted for the simplicity of the specification.

As described above, the keypad for a mobile terminal according to an exemplary embodiment of the present invention is provided on a keyboard displayed on the touch screen. Accordingly, there are excellent advantages in that a touch having a three-dimensional effect is possible, the entry of a misspelling or missing word attributable to an error of a touch can be prevented, and keyboard input can be performed even without opening the cover of the casing.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A keypad for a mobile terminal, comprising:
a mobile terminal equipped with a touch screen; and
a keypad member fixed to a position of the touch screen on which a keyboard is displayed and configured to comprise a plurality of button units having a key arrangement corresponding to the keyboard and to input a key of the keyboard, placed in a position corresponding to a selected button unit of the button units, to the mobile terminal when the selected one is pressed.

2. The keypad according to claim 1, wherein:
the keypad member is made of any one of flexible synthetic resin, fabric materials, and synthetic resin so that the button units are pressed, and
a conductor is provided at a center of each of the button units so that an electric current within a human body is detected to a touch screen side through a finger that presses the button units.

3. A keypad for a mobile terminal, comprising:
a mobile terminal equipped with a touch screen;
a casing member detachably combined with a back of the mobile terminal;
a cover member connected to one side of the casing member in such a way as to be rotatably moved and configured to open or shut the touch screen depending on whether or not the cover member is rotatably moved and to comprise an opening part formed at a position corresponding to a keyboard displayed on the touch screen; and
a keypad member placed within the opening part, connected to the cover member in such a way as to be rotatably moved, selectively located in the keyboard displayed on the touch screen when the keypad member is rotatably moved solely or along with the cover member, and configured to comprise a plurality of button units having a key arrangement corresponding to the keyboard and to input a key of the keyboard, placed in a position corresponding to a selected button unit of the button units, to the mobile terminal when the selected button unit is pressed.

4. The keypad according to claim 3, wherein:
the keypad member is made of any one of flexible synthetic resin, fabric materials, and synthetic resin so that the button units are pressed, and
a conductor is provided at a center of each of the button units so that an electric current within a human body is detected to a touch screen side through a finger that presses the button units.

5. A keypad for a mobile terminal, comprising:
a mobile terminal equipped with a touch screen;
a casing member detachably combined with a back of the mobile terminal; and
a keypad member connected to one side of the casing member in such a way as to be rotatably moved, selectively located in a keyboard displayed on the touch screen whether or not the keypad member is rotatably moved, and configured to comprise a plurality of button units having a key arrangement corresponding to the keyboard and to input a key of the keyboard, placed in a position corresponding to a selected button unit of the button units, to the mobile terminal when the selected button unit is pressed.

6. The keypad according to claim 5, wherein:
the keypad member is made of any one of flexible synthetic resin, fabric materials, and synthetic resin so that the button units are pressed, and
a conductor is provided at a center of each of the button units so that an electric current within a human body is detected to a touch screen side through a finger that presses the button units.
